# EUROPEAN PATENT SPECIFICATION

(11) **EP 4 501 106 B1**
(45) Date of publication and mention of the grant of the patent: **21.10.2026**
(21) Application number: 23781055.1
(22) Date of filing: 31.03.2023
(51) Int. Cl.: A01K 29/00, A01K 11/00

(54) **DATA COLLECTION DEVICE, PROGRAM, AND DATA COLLECTION METHOD**
DATENSAMMELVORRICHTUNG, PROGRAMM UND DATENSAMMELVERFAHREN
DISPOSITIF DE COLLECTE DE DONNÉES, PROGRAMME, ET PROCÉDÉ DE COLLECTE DE DONNÉES

(30) Priority: 31.03.2022 JP 2022059740
(43) Date of publication of application: 05.02.2025
(73) Proprietor: FURUKAWA ELECTRIC CO., LTD., Tokyo 100-8322 (JP)
(72) Inventor: ISHII, Takayuki, Tokyo 100-8322 (JP); ODAKA, Kunio, Tokyo 100-8322 (JP); KISE, Tomofumi, Tokyo 100-8322 (JP); FUKUSHIMA, Masayuki, Tokyo 100-8322 (JP); YAMASAKI, Miku, Tokyo 100-8322 (JP); NAKAI, Yukako, Tokyo 100-8322 (JP); NARUI, Hirokazu, Tokyo 100-8322 (JP)
(74) Representative: Papula Oy
(86) International application number: PCT/JP2023/013532
(87) International publication number: WO 2023/191047

(56) References cited:
- WO-A1-2021/118442
- JP-A- 2017 042 085
- JP-A- 2017 108 345
- JP-A- 2019 509 761
- JP-A- 2020 010 894
- JP-A- 2021 048 797
- JP-B2- 4 739 439
- JP-B2- 5 750 484
- JP-B2- 6 958 248
- KR-A- 20180 119 091
- US-A1- 2011 140 967
- US-A1- 2011 298 619

## Description

### TECHNICAL FIELD

The present invention relates to a data collection device, a program, and a data collection method.

### BACKGROUND ART

Conventionally, techniques for identifying the behavioral state of animals being bred are known. Examples of such techniques are disclosed in Patent Documents 1 and 2. Patent Document 1 discloses a technique for identifying abnormal information on animals, based on chronologically searched animal observation data and individual animal information. Patent Document 2 discloses a technique for acquiring rules or behavior about the conditions of animals, based on chronological data.

### Citation List

### Patent Document

Patent Document 1: Japanese Patent No. 6096738
Patent Document 2: Japanese Patent No. 6057786

US 2011/298619 A1 (O'HARE BRENDAN [GB] ET AL) 8 December 2011 (2011-12-08) is considered to be the prior art closest to the subject-matter of the appended claims, and discloses "an animal monitoring system, comprising at least one tag attachable to an animal, a real time location system (RTLS) for determining the three dimensional position of said at least one tag within a monitoring zone, orientation determining means for determining the orientation of said one tag''.

### DISCLOSURE OF THE INVENTION

### Problems to be Solved by the Invention

However, increasing the amount of acquired data enhances the accuracy in identifying the behavioral state of animals, but also increases the data volume and the processing load. While the techniques disclosed in Patent Documents 1 and 2 can identify the behavioral state of animals using chronological data, there was room for improvement in efficiently collecting data useful for identifying the behavioral state of animals.

The present invention is set out in the appended claims, and aims to provide a data collection device, a program, and a data collection method, which are capable of efficiently collecting data useful for identifying the behavioral state of animals.

### Means for Solving the Problems

The present invention relates to a data collection device, which includes: a data acquisition unit that continuously acquires data indicating an activity level of an animal; an identifying unit that analyzes the data for a predetermined period and identifies a trend in a change in the activity level over time; and a data acquisition amount adjustment unit that adjusts an acquisition amount of the data, based on the identified trend in a change in the activity level over time, in which the data acquisition unit acquires data in accordance with the acquisition amount adjusted by the data acquisition amount adjustment unit.

The data acquisition amount adjustment unit may adjust the acquisition amount of the data for each time zone by adjusting the frequency of acquiring the data by the data acquisition unit for each time zone.

The data acquisition amount adjustment unit may adjust the acquisition amount of the data higher for time zones with higher activity levels, based on the trend in the change in the activity level over time, and adjust the acquisition amount of the data lower for time zones with lower activity levels, based on the trend in the change in the activity level over time.

The data may include at least one of location information indicating a location where the animal exists, acceleration information acquired from an accelerometer provided on the animal, and angular velocity information acquired from an angular velocity sensor provided on the animal.

The data acquisition amount adjustment unit may adjust the acquisition amount of the data for each time zone by controlling an operation of acquiring the data by the data acquisition unit.

The data may be detected by a sensor, and the data acquisition amount adjustment unit may adjust the acquisition amount of the data for each time zone by discarding the data received from the sensor.

The data acquisition unit may acquire data from a sensor, and the data acquisition amount adjustment unit may adjust the acquisition amount of the data for each time zone by controlling an interval of transmitting the data by the sensor.

The data acquisition unit may acquire data from a sensor, and the data acquisition amount adjustment unit may adjust the acquisition amount of the data for each time zone by controlling an interval of detecting the data by the sensor.

The data acquisition unit may be detected by a data detection unit of a sensor, and the data acquisition amount adjustment unit may adjust the acquisition amount of the data for each time zone by controlling an operation of power supply to the data detection unit.

The present invention also relates to a program that causes a computer to implement: a data acquisition function to continuously acquire data indicating an activity level of an animal; an identifying function to analyze the data for a predetermined period and identify a trend in the change in the activity level over time; and a data acquisition amount adjustment function to adjust an acquisition amount of the data, based on the identified trend in the change in the activity level over time, in which the data acquisition function acquires data in accordance with the acquisition amount adjusted by the data acquisition amount adjustment function.

The present invention also relates to a data collection method executed by a data collection device, in which the method includes: a data acquisition step of continuously acquiring data indicating an activity level of an animal; an identifying step of analyzing the data for a predetermined period and identifying a trend in the change in the activity level over time; and a data acquisition amount adjusting step of adjusting an acquisition amount of the data, based on the identified trend in the change in the activity level over time, in which the data acquisition step acquires data in accordance with the acquisition amount adjusted by the data acquisition amount adjustment step.

### Effects of the Invention

According to the present invention, it is possible to efficiently collect data useful for identifying the behavioral state of animals.

### BRIEF DESCRIPTION OF THE DRAWINGS

FIG. 1 is a schematic diagram illustrating the overall configuration of a data collection system according to an embodiment of the present invention;
FIG. 2 is a block diagram illustrating the configuration of hardware and functional blocks of a sensor device according to an embodiment of the present invention;
FIG. 3 is a block diagram illustrating the configuration of hardware and functional blocks of a data collection device according to an embodiment of the present invention;
FIG. 4 is a graph illustrating the result of an additive model for identifying the periodicity of the activity level for each time zone by the data collection device according to an embodiment of the present invention; and
FIG. 5 is a flowchart illustrating an example of the data collection processing executed by the data collection device according to an embodiment of the present invention.

### PREFERRED MODE FOR CARRYING OUT THE INVENTION

Hereinafter, the present invention will be described based on embodiments with reference to the accompanying drawings. The present invention is not limited to the following embodiments. Each drawing referenced in the following description schematically illustrates the shape, size, and positional relationships to an extent that allows understanding of the contents of the present disclosure. In other words, the present invention is not limited to the shapes, sizes, and positional relationships illustrated in each drawing.

### (Embodiments)

### <Data Collection System S>

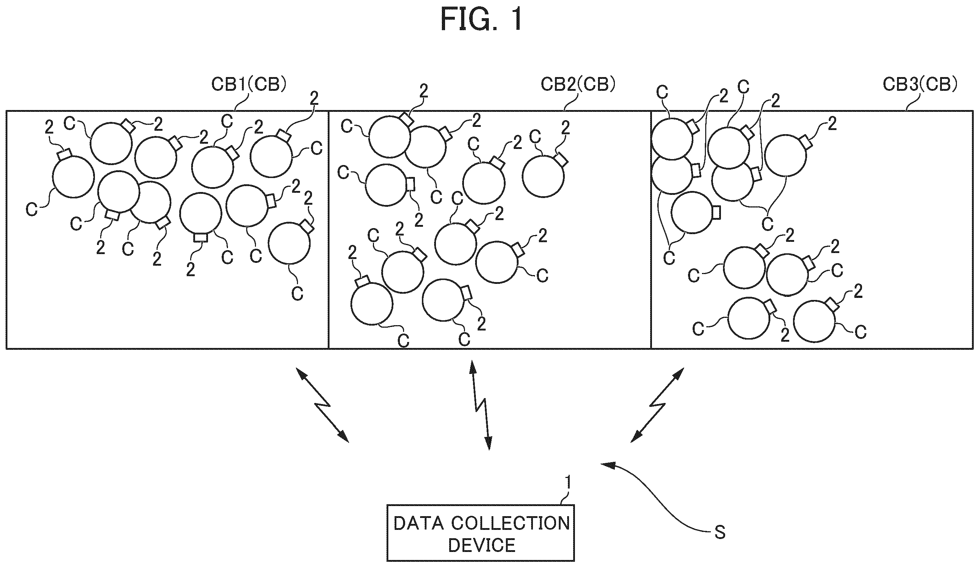

FIG. 1 is a schematic diagram illustrating the overall configuration of a data collection system S according to one embodiment of the present invention. As illustrated in FIG. 1, the data collection system S of the present embodiment includes the function to, for example, collect data indicating the activity level of the cow C bred by a dairy farmer, analyze the data, and adjust the data acquisition amount. The target animals as the target of data collection are not limited to cows **C,** but may include all animals beneficial for identifying and utilizing activity levels, animals under the category of so-called industrial animals such as pigs, sheep, horses, and goats, animals being bred in zoos, so-called pet animals, and human beings.

FIG. 1 is a plan view schematically illustrating three cattle barns CB, specifically cattle barns CB1 to CB3, in a cowhouse. FIG. 1 illustrates a situation where ten cows C are bred in each cattle barn CB, but the number of the cows C bred in each cattle barn CB is not particularly limited. For example, there may be fewer than ten cows or more than ten cows.

A feeding area, a milk-feeding area, and a water-drinking area are provided at appropriate places in the cattle barn CB, and the cow C can feed (feeding motion), suckle (suckling motion), and drink water (water-drinking motion) at each respective place.

The data collection system S includes a plurality of sensor devices 2 (sensors) and a data collection device 1. As illustrated in FIG. 1, the sensor device 2 including a location sensor is attached to all of the cows C in the cattle barns CB, and each acquires location information indicating the location of the cow C. The sensor device 2 includes a data transmission function to transmit the acquired location information to the data collection device 1 via near-field communication (NFC), for example. In the present embodiment, the sensor device 2 is fixed to a tag attached to the ear of the cow **C,** but may be fixed to a collar worn around the neck of the cow C or may be attached to other parts of the body.

The data collection device 1 is an information processing device that implements the main functions of the data collection processing of the present embodiment, and installed near the cowhouse including the cattle barn CB, for example, in a management building of the dairy farmer. The data collection device 1 acquires and analyzes data such as location information indicating the activity level of the cow C from the sensor devices 2 attached to each cow **C,** and adjusts the data acquisition amount, based on the analysis results.

### <Sensor Device 2>

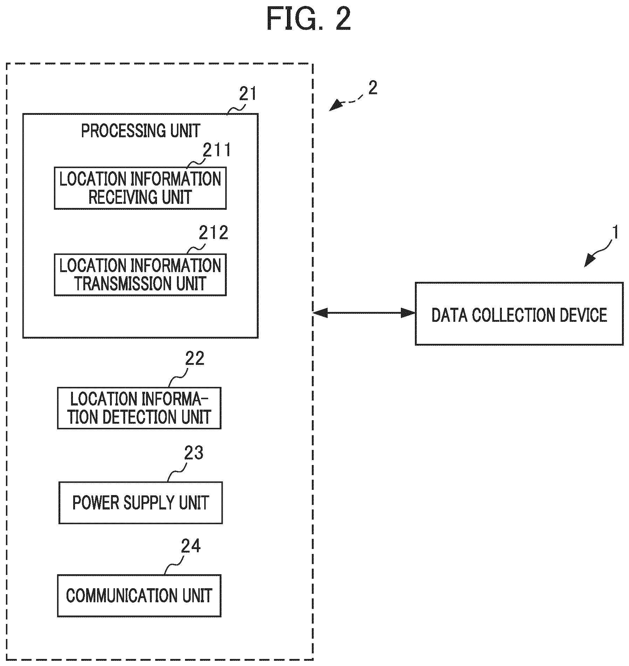

Next, the functional configuration of the sensor device 2 will be described. FIG. 2 is a block diagram illustrating the configuration of hardware and functional blocks of the sensor device 2.

As illustrated in FIG. 2, the sensor device 2 includes a processing unit 21, a location information detection unit (data detection unit) 22, a power supply unit 23, and a communication unit 24.

The location information detection unit 22 is a sensor for acquiring location information that is data indicating the activity level of the cow **C.** The location information detection unit 22 may be configured to detect location information using a satellite positioning system (GNSS; Global Navigation Satellite System) such as GPS. The location information detection unit 22 includes an antenna that receives positioning satellite signals transmitted from a plurality of positioning satellites and determines its own location, based on the received positioning satellite signals. The location information detected by the location information detection unit 22 includes, for example, the latitude, longitude, and altitude of the location where the sensor device 2 attached to the cow C exists. The timing of detecting location information by the location information detection unit 22 is not particularly limited. In the present embodiment, for example, the location information detection unit 22 detects location information every 0.2 seconds. The time interval of detecting location information by the location information detection unit 22 may be adjustable by the data collection device 1. The location information detection unit 22 acquires location information along with time information indicating the timing when the location information was detected.

The processing unit 21 is implemented by a processor such as a CPU that executes arithmetic processing. The processing unit 21 includes a location information receiving unit 211 and a location information transmission unit 212.

The location information receiving unit 211 receives output signals from the location information detection unit 22, executes predetermined processing such as AD conversion into digital data.

The location information transmission unit 212 executes the processing of transmitting the digital data of location information generated by the location information receiving unit 211 to the communication unit 24. The transmission interval of location information may be a fixed transmission interval or a transmission interval that varies based on a control signal from the data collection device 1. The location information transmission unit 212 executes the processing of transmitting the location information detected by the location information detection unit 22 and associated with the time information to the data collection device 1 via the communication unit 24. The time information may include, for example, the date and time when the location information detection unit 22 detected the location information.

The power supply unit 23 is configured to be capable of supplying power, which is the driving source of the sensor device 2, to each part of the sensor device 2. The power supply unit 23 is composed of, for example, a battery. Start and stop of the power supply from the power supply unit 23 to the location information detection unit 22 may be controllable by the data collection device 1.

The communication unit 24 includes the function to receive the digital data representing the sensor output signals from the location information transmission unit 212 of the processing unit 21 and wirelessly transmit the digital data using a predetermined communication method. In the present embodiment, this is configured as a communication module with a communication function conforming to Bluetooth (registered trademark) standards. The location information transmitted from the location information transmission unit 212 via the communication unit 24 is transmitted as Bluetooth data and received by the data collection device 1.

The location information detection method for the cow C is not limited to the method using a satellite positioning system. For example, a method may be employed to detect the location information on the cow C by the sensor device (sensor), which includes the sensor unit that is attached to the cow C and transmits digital data, and the location detection unit that is installed in the cattle barn CB and receives digital data from the sensor unit. Specifically, for example, the location detection unit functioning as a locator for utilizing the direction-finding function included in Bluetooth calculates the entry angle of the Bluetooth digital data received from the sensor device and detects the location of the sensor unit as the location information on the cow C. The location detection unit then transmits the location information on the cow C to the animal management device 1.

### <Data Collection Device 1>

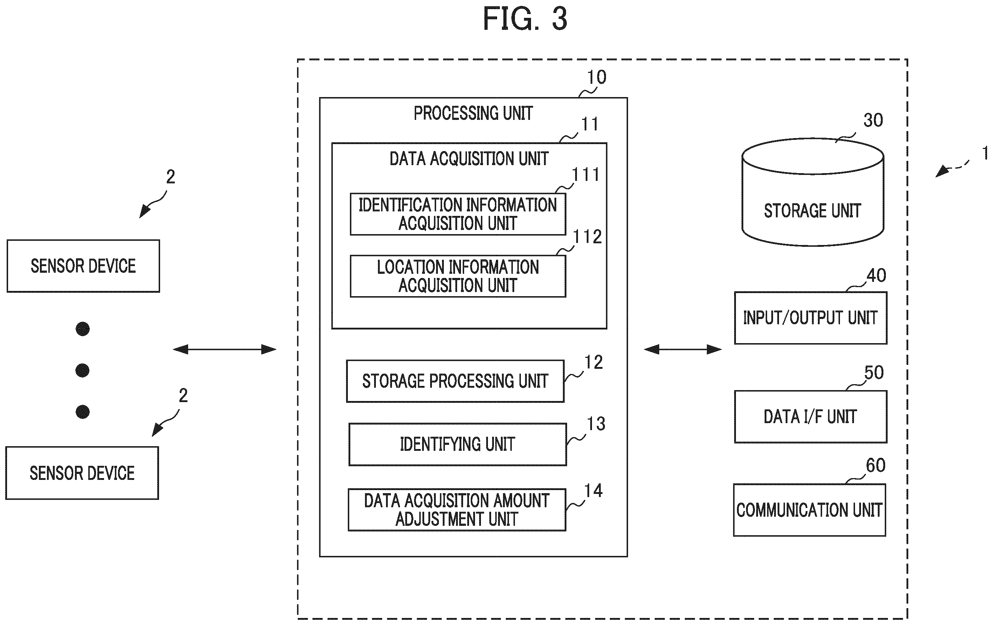

Next, the functional configuration of the data collection device 1 will be described. FIG. 3 is a block diagram illustrating the configuration of hardware and functional blocks of the data collection device 1. The data collection device 1 is composed of general-purpose hardware. Although detailed later, the program according to the present invention is executed on general-purpose server computers or personal computers to implement the functions of the present invention.

The data collection device 1 is an information processing device such as a server computer or a personal computer, and includes a processing unit 10, a storage unit 30, an input/output unit 40, a data interface (data I/F) unit 50, and a communication unit 60. The processing unit 10, the storage unit 30, the input/output unit 40, the data I/F unit 50, and the communication unit 60 are connected via a bus as an internal communication line (not illustrated).

The processing unit 10 is a computing device composed of a processor such as a CPU, and reads and executes various programs and data from the storage unit 30 to implement the functions of the data collection device 1. In the present embodiment, the processing unit 10 executes the data processing of each functional unit: the data acquisition unit 11, the storage processing unit 12, the identifying unit 13, and the data acquisition amount adjustment unit 14. The operation of each functional unit will be described later.

The storage unit 30 is a storage area for various programs and data to enable the hardware group to function as the data collection device 1, and can be configured with ROM, RAM, flash memory, solid-state drive (SSD), or hard disk drive (HDD). Specifically, the storage unit 30 stores programs (control programs for the data collection device 1) for causing the processing unit 10 to execute the functions of the present embodiment, various parameters, information used for adjusting the acquisition amount of location information, information on the cow C, information on the cattle barn CB, operation input information input from external sources, and activity levels of each cow C.

The input/output unit 40 is configured with various input devices such as a keyboard, mouse, touch panel, and microphone, which allow data input to the data collection device 1 from external sources, and output devices such as a monitor display and speaker.

The data I/F unit 50 includes the function to control the data communication between the processing unit 10, the storage unit 30, the input/output unit 40, and the communication unit 60.

The communication unit 60 is a communication module that transmits and receives various data to and from the sensor devices 2 and is configured as hardware such as a network interface card (NIC). The communication unit 60 can also be used by the data collection device 1 to communicate with a communication network.

Next, the functions of the data collection device 1, implemented by the programs executed by the processing unit 10, will be described.

The data acquisition unit 11 includes an identification information acquisition unit 111 and a location information acquisition unit 112. The data acquisition unit 11 includes the function to receive information that is output from the sensor devices 2 attached to each cow C and the location detection unit.

The identification information acquisition unit 111 executes the processing of acquiring animal identification information from the sensor devices 2 transmitted to the data collection device 1. The identification information acquisition unit 111 may acquire information on the cow C registered in the sensor device 2 as unique animal identification information, or may acquire identification information on the sensor device 2 as animal identification information. The animal identification information may include information such as the weight, size, gender, age, medical history of the cow C, and the cattle barn CB to which the cow C belongs.

The location information acquisition unit 112 executes the processing of continuously acquiring location information that is data indicating the activity level of the cow C. The location information acquisition unit 112 acquires location information detected by the location information detection unit 22 of the sensor device 2 and transmitted to the data collection device 1 via the communication unit 24. In the present embodiment, the location information includes horizontal plane data such as latitude and longitude, but may also include information on the height such as altitude of the location where the cow C exists. In the present embodiment, the location information acquisition unit 112 acquires location information on the cow C detected every 0.2 seconds by the sensor device 2. For example, the location information acquisition unit 112 may average five consecutive location information points detected every 0.2 seconds so as to be calculated as the location information on the cow C over one second. The acquisition frequency of location information by the location information acquisition unit 112 is adjusted by the data acquisition amount adjustment unit 14. The data acquisition unit 11 transmits the animal identification information acquired by the identification information acquisition unit 111 and the location information on the cow C acquired every second by the location information acquisition unit 112, linked together, to the storage unit 30. The location information on the cow C acquired by the location information acquisition unit 112 is not limited to one second intervals. For example, the time may be less than one second or more than one second.

The activity level is a quantification of the physical state of an animal such as the cow C engaged in biological activities. The activity level may include, for example, the moving distance and motion amount of the cow C indicated by the continuously acquired location information, body temperature, pulse, etc. For example, besides the location information, acceleration information acquired from an accelerometer attached to the cow C or angular velocity information acquired from an angular velocity sensor may be used as data indicating the activity level of the cow C. In this case, the motion amount indicated by at least one of the acceleration information or angular velocity information, such as the movement amount of the legs, torso, or head of the cow C, can be used as the activity level.

The storage processing unit 12 executes the processing of storing the activity level for each cow C, based on the animal identification information acquired by the data acquisition unit 11. Specifically, the storage processing unit 12 chronologically stores the activity level for each cow C in the storage unit 30.

The identifying unit 13 executes the processing of analyzing location information for a predetermined period and identifying a trend in the change in the activity level over time of the cow C. The predetermined period is not particularly limited and may be one week, less than one week, or more than one week (for example, one month). The identifying unit 13 in the present embodiment identifies a trend in the change in the activity level over time of the cow C by identifying the periodicity of the activity level of the cow C for each time zone. For the time zone, one hour out of the 24 divisions of a day may be used as one time zone, or one period out of predetermined standards such as morning, noon, and night may be used as one time zone. In the present embodiment, one hour out of the 24 divisions of a day is used as one time zone.

The details of the processing by the identifying unit 13 to identify the periodicity of the activity level of the cow C for each time zone will be described. First, the identifying unit 13 extracts the location information on one cow C for each second over the predetermined period from the storage unit 30. The identifying unit 13 identifies the activity level for each second by calculating the difference between the location information for each second extracted from the storage unit 30 and the location information for one second earlier. For example, the identifying unit 13 identifies the activity level for each second by calculating the moving distance of the cow C for one second, based on the difference between one location information point and the location information point one second earlier. Then, for example, the identifying unit 13 adds the plurality of one-second activity levels for each time zone in a predetermined period, thereby acquiring the activity level of one cow C for the time zone. The identifying unit 13 transmits the activity level of the cow C for the predetermined period, linked with the animal identification information, to the storage unit 30.

Next, the identifying unit 13 identifies the periodicity of the activity level for each time zone from the activity level over the predetermined period using known chronological data analysis methods such as an additive model or STL (A Seasonal-Trend Decomposition Procedure Based on LOESS). STL is described, for example, in the following paper:

R. B. Cleveland, W. S. Cleveland, J.E. McRae, and I. Terpenning (1990) STL: A Seasonal-Trend Decomposition Procedure Based on LOESS. Journal of Official Statistics, 6, 3-73.

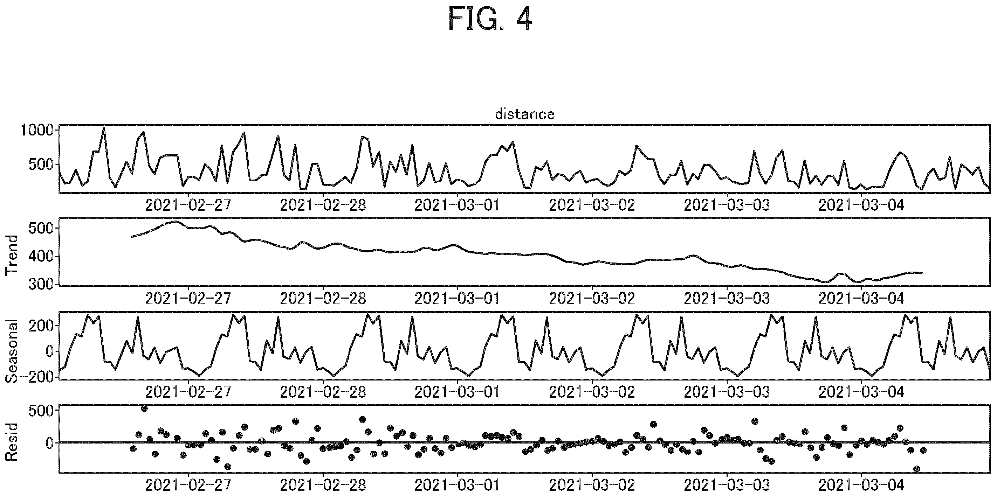

FIG. 4 is a graph illustrating the result of an additive model used by the data collection device 1 for identifying the periodicity of the activity level for each time zone. In each of the graphs G1 to G4 in FIG. 4, the horizontal axis represents the date and time, and the vertical axis represents the activity level. The graph G1 in FIG. 4 illustrates the transition of the activity level as raw data. The graph G2 in FIG. 4 illustrates the trend (Trend), which is the long-term fluctuation. The graph G3 in FIG. 4 illustrates the seasonal component (Seasonal), which periodically fluctuates over a fixed time (24 hours in the present embodiment). The graph G4 in FIG. 4 illustrates the residuals (Resid), which are the noise that cannot be explained by the trend or seasonal components. The raw data of the location information illustrated in the graph G1 in FIG. 4 is composed of the trend illustrated in the graph G2, the seasonal component illustrated in the graph G3, and the residuals illustrated in the graph G4. The identifying unit 13 identifies the periodicity of the activity level for each time zone as the seasonal component acquired by the additive model.

The data acquisition amount adjustment unit 14 executes the processing of adjusting the acquisition amount of location information, based on the trend in the change in the activity level over time identified by the identifying unit 13. For example, the data acquisition amount adjustment unit 14 adjusts the acquisition frequency of the location information by the data acquisition unit 11 for each time zone, based on the periodicity for each time zone identified by the identifying unit 13, thereby adjusting the acquisition amount of the location information for each time zone. Specifically, the data acquisition amount adjustment unit 14 adjusts the acquisition amount of the location information higher for time zones with higher activity levels, and adjusts the acquisition amount of the location information lower for time zones with lower activity levels, based on the identified periodicity. In this case, the data acquisition amount adjustment unit 14 may adjust the acquisition amount of the location information differently for all time zones or adjust the acquisition amount of the location information to the same amount for a plurality of time zones. For example, the data acquisition amount adjustment unit 14 may adjust the acquisition amount of the location information for three time zones with high activity levels to the amount detected at one-second intervals, adjust the acquisition amount of the location information for three time zones with low activity levels to the amount detected at 30-minute intervals, and adjust the acquisition amount of the location information for the remaining time zones to the amount detected at 10-minute intervals.

For example, in a case where the acquisition amount of the location information is set to the same amount for all time zones, the data acquisition amount adjustment unit 14 may determine a time zone to increase the acquisition amount of the location information, and another time zone to decrease the acquisition amount of the location information, and executes adjustments based on the determination results. Specifically, the data acquisition amount adjustment unit 14 may execute the processing of increasing the acquisition amount of the location information for time zones where the activity level is above a first threshold, and execute the processing of decreasing the acquisition amount of the location information for time zones where the activity level is below a second threshold (second threshold < first threshold). For example, the data acquisition amount adjustment unit 14 may select N (N is an integer of 1 or more) time zones in descending order from the highest of activity level from the plurality of time zones in a day, and increase the acquisition amount of the location information for the selected time zones. Conversely, the data acquisition amount adjustment unit 14 may select M (M is an integer of 1 or more) time zones in ascending order of activity level from the plurality of time zones in a day, and decrease the acquisition amount of the location information for the selected time zones. For example, in the periodicity analysis results illustrated in FIG. 4, the data acquisition amount adjustment unit 14 may increase the acquisition amount of the location information for the time zones from 8:00 to 9:00, 9:00 to 10:00, 15:00 to 16:00, and 18:00 to 19:00, and decrease the acquisition amount of the location information for the time zones from 23:00 to 3:00, 11:00 to 13:00, and 17:00 to 18:00.

Next, the specific method by which the data acquisition amount adjustment unit 14 adjusts the acquisition amount of the location information for each time zone will be described. The data acquisition unit 11 acquires data in accordance with the acquisition amount adjusted by the data acquisition amount adjustment unit 14.

For example, the data acquisition amount adjustment unit 14 may adjust the acquisition amount of the location information for each time zone by controlling the operation of the sensor device 2 or by controlling the operation of the data collection device 1 without controlling the operation of the sensor device 2.

For example, the data acquisition amount adjustment unit 14 may adjust the acquisition amount of the location information by the data acquisition unit 11 for each time zone by controlling the detection operation of the location information detection unit 22 of the sensor device 2. Specifically, the data acquisition amount adjustment unit 14 controls the interval of detecting the location information by the location information detection unit 22 to be wider when reducing the acquisition amount of the location information, and controls the interval of detecting the location information by the location information detection unit 22 to be narrower when increasing the acquisition amount of the location information. As a result, the acquisition amount of the location information by the data acquisition unit 11 is adjusted.

For example, the data acquisition amount adjustment unit 14 may adjust the acquisition amount of the location information by the data acquisition unit 11 for each time zone by controlling the operation of transmitting the location information by the location information transmission unit 212 of the sensor device 2. Specifically, the data acquisition amount adjustment unit 14 controls the interval of transmitting the location information by the location information transmission unit 212 to be wider when reducing the acquisition amount of the location information, and controls the interval of transmitting the location information by the location information transmission unit 212 to be narrower when increasing the acquisition amount of the location information. As a result, the acquisition amount of the location information by the data acquisition unit 11 is adjusted.

For example, the data acquisition amount adjustment unit 14 may adjust the acquisition amount of the location information for each time zone by controlling the operation of power supply from the power supply unit 23 of the sensor device 2 to the location information detection unit 22. For example, the data acquisition amount adjustment unit 14 may adjust the acquisition amount of the location information for each time zone by switching the power supply unit 23 ON and OFF. Specifically, the data acquisition amount adjustment unit 14 switches the power supply unit 23 OFF when reducing the acquisition amount of the location information, stopping the operation of power supply from the power supply unit 23 to the location information detection unit 22. As a result, the frequency of detecting the location information by the location information detection unit 22 decreases, and the acquisition amount of the location information by the data acquisition unit 11 decreases.

For example, the data acquisition amount adjustment unit 14 may adjust the acquisition amount of the location information for each time zone by controlling the operation of acquiring the location information by the data acquisition unit 11 without controlling the operation of the sensor device 2. Specifically, the data acquisition amount adjustment unit 14 increases the frequency of acquiring the location information by the data acquisition unit 11 from the sensor device 2 for time zones with higher activity levels, and decreases the frequency of acquiring the location information by the data acquisition unit 11 from the sensor device 2 for time zones with lower activity levels.

For example, the data acquisition amount adjustment unit 14 may adjust the acquisition amount of the location information by the data acquisition unit 11 by discarding the location information transmitted from the sensor device 2 without controlling the operation of the sensor device 2. Specifically, the data acquisition amount adjustment unit 14 selectively discards the location information received from the sensor device 2 before being acquired by the data acquisition unit 11, thereby adjusting the amount of acquiring the location information by the data acquisition unit 11.

### <Data Acquisition Amount Adjustment Processing by Data Collection Device 1>

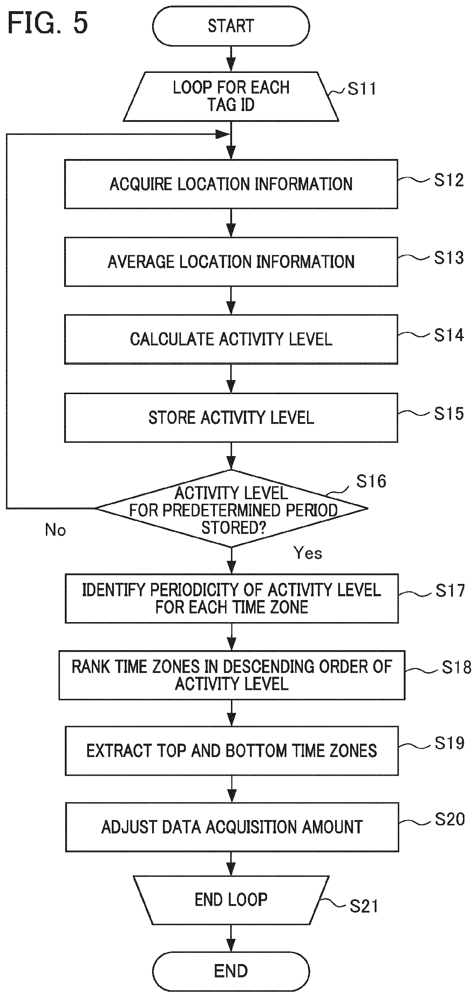

Next, the data acquisition amount adjustment processing executed by the data collection device 1 in the present embodiment will be described. FIG. 5 is a flowchart illustrating an example of the data acquisition amount adjustment processing executed by the data collection device 1.

The data acquisition amount adjustment processing illustrated in FIG. 5 is executed at regular time intervals for each cow C bred in the cattle barn CB (loop of Step S11).

In Step S12, the data acquisition unit 11 acquires a plurality of pieces of location information on the cow C detected at predetermined time intervals by the location information detection unit 22 from the sensor device 2 attached to the cow C, along with animal identification information and time information. The acquisition amount of location information by the data acquisition unit 11 is set to be the same for all time zones.

In Step S13, the location information acquisition unit 112 of the data acquisition unit 11 executes the processing of averaging the plurality of pieces of location information acquired within a fixed time in Step S12. For example, the location information acquisition unit 112 averages five consecutive pieces of location information detected every 0.2 seconds to acquire the location information on the cow C for one second. The one-second location information acquired in Step S13 is chronologically stored in the storage unit 30, linked with the animal identification information and the time information.

In Step S14, the identifying unit 13 extracts a plurality of pieces of location information on the cow C stored in Step S13 and calculates the activity level indicated by the location information on the cow **C.** The identifying unit 13 identifies the activity level for each second by calculating the difference between the location information for each second and the location information for one second earlier. For example, the identifying unit 13 identifies the activity level for each second by calculating the moving distance of the cow C for one second, based on the difference between one piece of location information and another piece of location information one second earlier. Then, the identifying unit 13 identifies the activity level of the cow C for each time zone by summing the plurality of one-second activity levels for each time zone. In the example of the processing illustrated in FIG. 5, one time zone is one hour.

In Step S15, the storage processing unit 12 stores the activity level of the cow C for each time zone identified in Step S14 in the storage unit 30.

In Step S16, the processing unit 10 determines whether the activity level of one cow C for a predetermined period has been stored in the storage unit 30. In the example of the processing illustrated in FIG. 5, the predetermined period is one week. If the processing unit 10 determines that the activity level of one cow C for one week has been stored in the storage unit 30 (Step S16; Yes), the processing proceeds to Step S17. On the other hand, if the processing unit 10 determines that the activity level of one cow C for one week has not been stored in the storage unit 30 (Step S16; No), the processing returns to Step S12.

In Step S17, the identifying unit 13 identifies the periodicity of the activity level for each time zone, based on the one-week activity level of the cow C extracted from the storage unit 30 by the storage processing unit 12. For example, the identifying unit 13 identifies the seasonal component acquired by the additive model for the one-week activity level of the cow C as the periodicity of the activity level for each time zone.

In Step S18, the data acquisition amount adjustment unit 14 ranks the time zones in descending order of activity level. For example, the data acquisition amount adjustment unit 14 may divide a day into 24 time zones of one hour each, and rank the 24 time zones in order from the highest to the lowest activity level, based on the periodicity identified in Step S17.

In Step S19, the data acquisition amount adjustment unit 14 extracts the top three time zones with the highest activity levels and the bottom three time zones with the lowest activity levels, based on the ranking of the time zones acquired in Step S18.

In Step S20, the data acquisition amount adjustment unit 14 adjusts the data acquisition amount for each time zone. For example, the data acquisition amount adjustment unit 14 executes adjustment to increase the acquisition amount of the location information for the top three time zones with the highest activity levels extracted in Step S19, and decrease the acquisition amount of the location information for the bottom three time zones with the lowest activity levels. For example, the data acquisition amount adjustment unit 14 controls the sensor device 2 to adjust the interval of detecting the location information by the sensor device 2, thereby increasing or decreasing the acquisition amount of the location information by the data acquisition unit 11 for each time zone.

In Step S21, the processing unit 10 determines whether the data acquisition amount adjustment processing has been completed for all cows C in the cattle barn CB. If the processing unit 10 determines that the data acquisition amount adjustment processing has not been completed for all cows C in the cattle barn CB (Step S21; No), the processing returns to Step S20 to proceed with the data acquisition amount adjustment processing for other cows C. On the other hand, if the processing unit 10 determines that the data acquisition amount adjustment processing has been completed for all cows C in the cattle barn CB (Step S21; Yes), and the data acquisition amount adjustment processing executed by the data collection device 1 is completed.

According to the above-described embodiment, the following effects can be achieved.

The data collection device 1 according to the present embodiment includes the data acquisition unit 11 that continuously acquires location information indicating the activity level of the cow C, the identifying unit 13 that analyzes the location information over a predetermined period and identifies a trend in the change in the activity level over time, and the data acquisition amount adjustment unit 14 that adjusts the acquisition amount of the location information, based on the identified trend in the change in the activity level over time. The data acquisition unit 11 acquires location information in accordance with the acquisition amount adjusted by the data acquisition amount adjustment unit 14.

As a result, the acquisition amount of location information can be adjusted in consideration of the trend in the change in the activity level over time of the cow C for each time zone, enabling efficient collection of data useful for identifying the behavioral state of the cow C.

In the data collection device 1 according to the present embodiment, the data acquisition amount adjustment unit 14 adjusts the acquisition amount of data for each time zone by adjusting the frequency of acquiring the location information by the data acquisition unit 11 for each time zone.

As a result, the frequency of acquiring the location information for each time zone used for identifying the behavioral state of the cow C can be adjusted in consideration of the periodic changes in the activity level of the cow C for each time zone. Therefore, for example, the acquisition of location information can be adjusted to acquire location information with finer sampling intervals during time zones with significant changes in location information, enabling more accurate identification of the behavioral state of the cow C. Conversely, the acquisition of location information can be adjusted to acquire location information with wider sampling intervals during time zones with minimal changes in location information, reducing the processing load of unnecessary data.

In the data collection device 1 according to the present embodiment, the data acquisition amount adjustment unit 14 adjusts the amount of acquiring the location information higher for time zones with higher activity levels, and adjusts the amount of acquiring the location information lower for time zones with lower activity levels, based on the trend in the change in the activity level over time.

As a result, more accurate behavioral state can be identified by adjusting the acquisition amount of the location information higher for time zones with high activity levels and significant changes in location information, and the data amount can be reduced by adjusting the acquisition amount of the location information lower for time zones with low activity levels and minimal changes in location information. This prevents the data collection device 1 from being overwhelmed by the increased data volume, reduces the processing load, and enables accurate identification of the behavioral state of the cow **C.** Therefore, the behavioral state of the cow C can be efficiently and accurately identified.

In the data collection device 1 according to the present embodiment, the data for identifying the activity level of the cow C includes at least one of the location information indicating the location of the cow **C,** the acceleration information acquired from the accelerometer provided on the cow C, and the angular velocity information acquired from the angular velocity sensor provided on the cow C.

As a result, the activity level can be accurately identified with simple processing.

In the data collection device 1 according to the present embodiment, the data acquisition amount adjustment unit 14 adjusts the acquisition amount of the location information for each time zone by controlling the operation of acquiring the location information by the data acquisition unit 11.

As a result, the processing load for acquiring the location information for each time zone for identifying the behavioral state of the cow C can be optimized with simple processing by adjusting the operation of the data collection device 1 itself without controlling the operation of the sensor device 2.

In the data collection device 1 according to the present embodiment, the location information is detected by the sensor device 2, and the data acquisition amount adjustment unit 14 adjusts the acquisition amount of the location information for each time zone by discarding the location information received from the sensor device 2.

As a result, the capacity of the data collection device 1 can be prevented from being overwhelmed by the increased data volume with simple processing by adjusting the operation of the data collection device 1 itself without controlling the operation of the sensor device 2.

In the data collection device 1 according to the present embodiment, the data acquisition unit 11 acquires location information from the sensor device 2, and the data acquisition amount adjustment unit 14 adjusts the acquisition amount of the location information for each time zone by controlling the interval of transmitting the location information by the sensor device 2.

As a result, the frequency of transmitting the location information from the sensor device 2 to the data collection device 1 can be adjusted based on the activity level. For example, the power consumption of the sensor device 2 can be reduced by reducing the frequency of transmitting the location information during time zones with low activity levels of the cow C.

In the data collection device 1 according to the present embodiment, the data acquisition unit 11 acquires location information from the sensor device 2, and the data acquisition amount adjustment unit 14 adjusts the amount of acquiring the location information for each time zone by controlling the interval of detecting the location information by the sensor device 2.

As a result, the detection interval of the location information from the sensor device 2 to the data collection device 1 can be adjusted based on the activity level. For example, the behavioral state of the cow C can be more accurately identified by increasing the detection frequency of the location information during time zones with high activity levels of the cow C, and the power consumption of the sensor device 2 can be reduced by reducing the detection frequency of the location information during time zones with low activity levels.

In the data collection device 1 according to the present embodiment, the data acquisition unit 11 acquires location information detected by the location information detection unit 22 of the sensor device 2, and the data acquisition amount adjustment unit 14 adjusts the acquisition amount of the location information for each time zone by controlling the operation of power supply to the location information detection unit 22.

As a result, since the operation of power supply to the location information detection unit 22 detecting location information can be adjusted based on the activity level of the cow C, for example, the power consumption of the sensor device 2 can be reduced by stopping the power supply to the location information detection unit 22 during time zones with low activity levels.

The program according to the present embodiment is a program that causes a computer to implement the data acquisition function to continuously acquire location information indicating the activity level of the cow C, the identifying function to analyze the location information over a predetermined period and identify a trend in the change in the activity level over time, and the data acquisition amount adjustment function to adjust the acquisition amount of the location information, based on the identified trend in the change in the activity level over time, in which the data acquisition function acquires location information in accordance with the acquisition amount adjusted by the data acquisition amount adjustment function.

As a result, the amount of acquiring the location information for each time zone can be adjusted in consideration of the trend in the change in the activity level over time for each time zone, enabling efficient collection of data useful for identifying the behavioral state of the cow C.

The data collection method according to the present embodiment is a data collection method executed by the data collection device 1, in which the method includes a data acquisition step of continuously acquiring location information indicating the activity level of the cow C, an identifying step of analyzing the location information over a predetermined period and identifying a trend in the change in the activity level over time, and a data acquisition amount adjusting step of adjusting the acquisition amount of the location information, based on the identified trend in the change in the activity level over time, in which the data acquisition step acquires location information in accordance with the acquisition amount adjusted in the data acquisition amount adjustment step.

As a result, the amount of acquiring the location information for each time zone can be adjusted in consideration of the trend in the change in the activity level over time for each time zone, enabling efficient collection of data useful for identifying the behavioral state of the cow C.

Although the embodiments of the present invention have been described above, the present invention is not limited to the above-described embodiments and can be appropriately modified.

In the above embodiments, the processing unit 10 calculates the activity level from the location information at a plurality of points in time transmitted by the sensor device 2, but the data transmitted by the sensor device 2 may be directly used as the activity level. For example, the processing unit 10 may acquire the body temperature of the cow C acquired from a temperature sensor attached to the cow C as the activity level, or acquire the pulse rate of the cow C acquired from a pulse sensor attached to the cow C as the activity level.

In the above embodiment, the data acquisition amount adjustment unit 14 adjusts the acquisition amount of the location information for each time zone by adjusting the frequency of acquiring the location information by the data acquisition unit 11, but the acquisition amount of the location information for each time zone may be adjusted by increasing or decreasing the information amount of each piece of location information without changing the frequency of acquiring the location information.

For example, a location detector installed in the cattle barn CB.

### EXPLANATION OF REFERENCE NUMERALS

1: data collection device
11: data acquisition unit
13: identifying unit
14: data acquisition amount adjustment unit
C: cow (animal)

## Claims

1. A data collection device, comprising:
a data acquisition unit (11) that continuously acquires location information data indicating an activity level of an animal;
an identifying unit (13) that analyzes the location information data for a predetermined period of time and identifies a trend in a change in the activity level of the animal over time by identifying the periodicity of the activity level of the animal for each time zone as a seasonal component acquired by an additive model used by the identifying unit (13); and
a data acquisition amount adjustment unit (14) that adjusts an acquisition amount of the location information data, based on the trend in the change in the activity level of the animal over time identified,
wherein the data acquisition unit (11) acquires location information data inaccordance with the acquisition amount adjusted by the data acquisition amount adjustment unit (14).

2. The data collection device according to claim 1, wherein the data acquisition amount adjustment unit (14) adjusts the acquisition amount of the data for each time zone by adjusting the frequency of acquiring the data by the data acquisition unit for each time zone.

3. The data collection device according to claim 1 or 2, wherein the data acquisition amount adjustment unit (14) adjusts the acquisition amount of the data higher for time zones with higher activity levels, based on the trend in the change in the activity level over time, and adjusts the acquisition amount of the data lower for time zones with lower activity levels, based on the trend in the change in the activity level over time.

4. The data collection device according to any one of claims 1 to 3, wherein the data includes at least one of location information indicating a location where the animal exists, acceleration information acquired from an accelerometer provided on the animal, and angular velocity information acquired from an angular velocity sensor provided on the animal.

5. The data collection device according to any one of claims 1 to 4, wherein the data acquisition amount adjustment unit (14) adjusts the acquisition amount of the data for each time zone by controlling an operation of acquiring the data by the data acquisition unit.

6. The data collection device according to any one of claims 1 to 4, wherein
the data is detected by a sensor (2), and
the data acquisition amount adjustment unit (14) adjusts the acquisition amount of the data for each time zone by discarding the data received from the sensor.

7. The data collection device according to any one of claims 1 to 4, wherein
the data acquisition unit (11) acquires data from a sensor 2, and
the data acquisition amount adjustment unit (14) adjusts the acquisition amount of the data for each time zone by controlling an interval of transmitting the data by the sensor.

8. The data collection device according to any one of claims 1 to 4, wherein
the data acquisition unit (11) acquires data from a sensor, and
the data acquisition amount adjustment unit (14) adjusts the acquisition amount of the data for each time zone by controlling an interval of detecting the data by the sensor.

9. The data collection device according to any one of claims 1 to 4, wherein
the data acquisition unit (11) is detected by a data detection unit of a sensor, and
the data acquisition amount adjustment unit (14) adjusts the acquisition amount of the data for each time zone by controlling an operation of power supply to the data detection unit.

10. The data collection device according to any of claims 1 to 9, wherein the time zone is an hour out of the 24 divisions of a day.

11. The data collection device according to any of claims 1 to 9, wherein the time zone is a period out of predetermined standards such as morning, noon, and night.

12. A computer program comprising instructions which, when the program is executed by a computer, cause the computer to implement:
a data acquisition function to continuously acquire location information data indicating an activity level of an animal;
an identifying function to analyze the location information data for a predetermined period of time and identify a trend in a change in the activity level of the animal over time by identifying the periodicity of the activity level of the animal for each time zone as a seasonal component acquired by an additive model used by the identifying function; and
a data acquisition amount adjustment function to adjust an acquisition amount of the location information data, based on the trend in the change in the activity level of the animal over time identified, wherein
the data acquisition function acquires location information data in accordance with the acquisition amount adjusted by the data acquisition amount adjustment function.

13. A data collection method executed by a data collection device, the method comprising:
a data acquisition step of continuously acquiring location information data indicating an activity level of an animal;
an identifying step of analyzing the location information data for a predetermined period of time and identifying a trend in a change in the activity level of the animal over time by identifying the periodicity of the activity level of the animal for each time zone as a seasonal component acquired by an additive model used by the identifying step; and
a data acquisition amount adjusting step of adjusting an acquisition amount of the location information data, based on the trend in the change in the activity level of the animal over time identified, wherein
the data acquisition step acquires location information data in accordance with the acquisition amount adjusted by the data acquisition amount adjustment step.

## Patentansprüche

1. Datensammelvorrichtung, umfassend:
eine Datenerfassungseinheit (11), die kontinuierlich Standortinformationsdaten erfasst, die ein Aktivitätsniveau eines Tieres anzeigen;
eine Identifizierungseinheit (13), die die Standortinformationsdaten für eine vorbestimmte Zeitperiode analysiert und eine Tendenz in einer Änderung des Aktivitätsniveaus des Tieres im Laufe der Zeit identifiziert durch Identifizieren der Periodizität des Aktivitätsniveaus des Tieres für jede Zeitzone als Saisonkomponente, die von einem additiven Modell erfasst wird, das von der Identifizierungseinheit (13) verwendet wird; und
eine Anpassungseinheit (14) von Datenerfassungsmenge, die eine Erfassungsmenge der Standortinformationsdaten basierend auf der identifizierten Tendenz in der Änderung des Aktivitätsniveaus des Tieres im Laufe der Zeit anpasst,
wobei die Datenerfassungseinheit (11) Standortinformationsdaten gemäß der durch die Anpassungseinheit (14) von Datenerfassungsmenge angepassten Erfassungsmenge erfasst.

2. Datensammelvorrichtung nach Anspruch 1, wobei die Anpassungseinheit (14) von Datenerfassungsmenge der Erfassungsmenge für Daten für jede Zeitzone anpasst durch Anpassen der Häufigkeit von Datenerfassung durch die Datenerfassungseinheit für jede Zeitzone.

3. Datensammelvorrichtung nach Anspruch 1 oder 2, wobei die Anpassungseinheit (14) von Datenerfassungsmenge die Erfassungsmenge von Daten für Zeitzonen mit höheren Aktivitätsniveaus basierend auf der Tendenz in der Änderung des Aktivitätsniveaus im Laufe der Zeit höher anpasst und die Erfassungsmenge der Daten für Zeitzonen mit niedrigeren Aktivitätsniveaus basierend auf der Tendenz in der Änderung des Aktivitätsniveaus im Laufe der Zeit niedriger anpasst.

4. Datensammelvorrichtung nach einem der Ansprüche 1 bis 3, wobei die Daten mindestens eines einschließen von Standortinformationen, die einen Standort anzeigen, an dem das Tier existiert, Beschleunigungsinformationen, die von einem Beschleunigungsmesser erfasst werden, der an dem Tier bereitgestellt ist, und Winkelgeschwindigkeitsinformationen, die von einem Winkelgeschwindigkeitssensor erfasst werden, der an dem Tier bereitgestellt ist.

5. Datensammelvorrichtung nach einem der Ansprüche 1 bis 4, wobei die Anpassungseinheit (14) von Datenerfassungsmenge die Erfassungsmenge der Daten für jede Zeitzone anpasst durch Steuern einer Operation von Datenerfassung durch die Datenerfassungseinheit.

6. Datensammelvorrichtung nach einem der Ansprüche 1 bis 4, wobei
die Daten durch einen Sensor (2) erfasst werden, und
die Anpassungseinheit (14) von Datenerfassungsmenge die Erfassungsmenge der Daten für jede Zeitzone anpasst durch Verwerfen der von dem Sensor empfangenen Daten.

7. Datensammelvorrichtung nach einem der Ansprüche 1 bis 4, wobei
die Datenerfassungseinheit (11) Daten von einem Sensor 2 erfasst und
die Anpassungseinheit (14) von Datenerfassungsmenge die Erfassungsmenge der Daten für jede Zeitzone anpasst, durch Steuern eines Intervalls von Übertragen der Daten durch den Sensor.

8. Datensammelvorrichtung nach einem der Ansprüche 1 bis 4, wobei
die Datenerfassungseinheit (11) Daten von einem Sensor erfasst und
die Anpassungseinheit (14) von Datenerfassungsmenge die Erfassungsmenge der Daten für jede Zeitzone anpasst, durch Steuern eines Intervalls von Erkennen der Daten durch den Sensor.

9. Datensammelvorrichtung nach einem der Ansprüche 1 bis 4, wobei
die Datenerfassungseinheit (11) durch eine Datenerkennungseinheit eines Sensors erkannt wird und
die Anpassungseinheit (14) von Datenerfassungsmenge die Erfassungsmenge der Daten für jede Zeitzone an, durch Steuern einer Operation von Stromversorgung der Datenerkennungseinheit.

10. Datensammelvorrichtung nach einem der Ansprüche 1 bis 9, wobei die Zeitzone eine Stunde aus 24 Unterteilungen eines Tages ist.

11. Datensammelvorrichtung nach einem der Ansprüche 1 bis 9, wobei die Zeitzone eine Periode aus vorbestimmten Standards ist, wie Morgen, Mittag und Nacht.

12. Computerprogramm, das Anweisungen umfasst, die, wenn das Programm von einem Rechner ausgeführt wird, bewirken, dass der Rechner Folgendes implementiert:
eine Datenerfassungsfunktion zum kontinuierlichen Erfassen von Standortinformationsdaten, die ein Aktivitätsniveau eines Tieres anzeigen;
eine Identifizierungsfunktion zum Analysieren der Standortinformationsdaten für eine vorbestimmte Zeitperiode
und Identifizieren einer Tendenz in einer Änderung des Aktivitätsniveaus des Tieres im Laufe der Zeit durch Identifizieren der Periodizität des Aktivitätsniveaus des Tieres für jede Zeitzone als Saisonkomponente, die von einem additiven Modell erfasst wird, die von der Identifizierungsfunktion verwendet wird; und
eine Anpassungsfunktion von Datenerfassungsmenge zum Anpassen einer Erfassungsmenge der Standortinformationsdaten basierend auf der identifizierten Tendenz in der Änderung des Aktivitätsniveaus des Tieres im Laufe der Zeit,
wobei die Datenerfassungsunktion Standortinformationsdaten gemäß der durch die Anpassungsfunktion von Datenerfassungsmenge angepassten Erfassungsmenge erfasst.

13. Datensammelverfahren, das durch eine Datensammelvorrichtung ausgeführt wird, wobei das Verfahren Folgendes umfasst:
einen Datenerfassungsschritt des kontinuierlichen Erfassens von Standortinformationsdaten, die ein Aktivitätsniveau eines Tieres anzeigen;
einen Identifizierungsschritt des Analysierens der Standortinformationen für eine vorbestimmte Zeitperiode und Identifizieren einer Tendenz in einer Änderung des Aktivitätsniveaus des Tieres im Laufe der Zeit durch Identifizieren der Periodizität des Aktivitätsniveaus des Tieres für jede Zeitzone als Saisonkomponente, die von einem additiven Modell erfasst wird, das von dem Identifizierungsschritt verwendet wird; und
einen Anpassungsschritt von Datenerfassungsmenge des Anpassens einer Erfassungsmenge der Standortinformationsdaten basierend auf der identifizierten Tendenz in der Änderung des Aktivitätsniveaus des Tieres im Laufe der Zeit,
wobei der Datenerfassungsschritt Standortinformationsdaten gemäß der durch den Anpassungsschritt von Datenerfassungsmenge angepassten Erfassungsmenge erfasst.

## Revendications

1. Dispositif de collecte de données, comprenant :
une unité d'acquisition de données (11) qui acquiert de manière continue des données d'informations de localisation indiquant un niveau d'activité d'un animal ;
une unité d'identification (13) qui analyse les données d'informations de localisation pendant une période de temps prédéterminée et identifie une tendance dans un changement du niveau d'activité de l'animal au fil du temps en identifiant la périodicité du niveau d'activité de l'animal pour chaque plage horaire en tant que composante saisonnière acquise par un modèle additif utilisé par l'unité d'identification (13) ; et
une unité d'ajustement de quantité d'acquisition de données (14) qui ajuste une quantité d'acquisition des données d'informations de localisation, sur la base de la tendance identifiée dans le changement du niveau d'activité de l'animal au fil du temps,
dans lequel l'unité d'acquisition de données (11) acquiert des données d'informations de localisation conformément à la quantité d'acquisition ajustée par l'unité d'ajustement de quantité d'acquisition de données (14).

2. Dispositif de collecte de données selon la revendication 1, dans lequel l'unité d'ajustement de quantité d'acquisition de données (14) ajuste la quantité d'acquisition des données pour chaque plage horaire en ajustant la fréquence d'acquisition des données par l'unité d'acquisition de données pour chaque plage horaire.

3. Dispositif de collecte de données selon la revendication 1 ou la revendication 2, dans lequel l'unité d'ajustement de quantité d'acquisition de données (14) ajuste à la hausse la quantité d'acquisition des données pour des plages horaires ayant des niveaux d'activité plus élevés, sur la base de la tendance dans le changement du niveau d'activité au fil du temps, et ajuste à la baisse la quantité d'acquisition des données pour des plages horaires ayant des niveaux d'activité plus faibles, sur la base de la tendance dans le changement du niveau d'activité au fil du temps.

4. Dispositif de collecte de données selon l'une quelconque des revendications 1 à 3, dans lequel les données incluent au moins un type d'informations parmi des informations de localisation indiquant un emplacement où l'animal existe, des informations d'accélération acquises à partir d'un accéléromètre disposé sur l'animal et des informations de vitesse angulaire acquises à partir d'un capteur de vitesse angulaire disposé sur l'animal.

5. Dispositif de collecte de données selon l'une quelconque des revendications 1 à 4, dans lequel l'unité d'ajustement de quantité d'acquisition de données (14) ajuste la quantité d'acquisition des données pour chaque plage horaire en commandant une opération d'acquisition des données par l'unité d'acquisition de données.

6. Dispositif de collecte de données selon l'une quelconque des revendications 1 à 4, dans lequel
les données sont détectées par un capteur (2), et
l'unité d'ajustement de quantité d'acquisition de données (14) ajuste la quantité d'acquisition des données pour chaque plage horaire en rejetant les données reçues du capteur.

7. Dispositif de collecte de données selon l'une quelconque des revendications 1 à 4, dans lequel
l'unité d'acquisition de données (11) acquiert des données provenant d'un capteur 2, et
l'unité d'ajustement de quantité d'acquisition de données (14) ajuste la quantité d'acquisition des données pour chaque plage horaire en commandant un intervalle de transmission des données par le capteur.

8. Dispositif de collecte de données selon l'une quelconque des revendications 1 à 4, dans lequel
l'unité d'acquisition de données (11) acquiert des données provenant d'un capteur, et
l'unité d'ajustement de quantité d'acquisition de données (14) ajuste la quantité d'acquisition des données pour chaque plage horaire en commandant un intervalle de détection des données par le capteur.

9. Dispositif de collecte de données selon l'une quelconque des revendications 1 à 4, dans lequel
l'unité d'acquisition de données (11) est détectée par une unité de détection de données d'un capteur, et
l'unité d'ajustement de quantité d'acquisition de données (14) ajuste la quantité d'acquisition des données pour chaque plage horaire en commandant une opération d'alimentation électrique de l'unité de détection de données.

10. Dispositif de collecte de données selon l'une quelconque des revendications 1 à 9, dans lequel la plage horaire est une heure parmi les 24 divisions d'une journée.

11. Dispositif de collecte de données selon l'une quelconque des revendications 1 à 9, dans lequel la plage horaire est une période parmi des normes prédéterminées telles que le matin, le midi et la nuit.

12. Programme d'ordinateur comprenant des instructions qui, lorsque le programme est exécuté par un ordinateur, amènent l'ordinateur à mettre en œuvre :
une fonction d'acquisition de données pour acquérir de manière continue des données d'informations de localisation indiquant un niveau d'activité d'un animal ;
une fonction d'identification pour analyser les données d'informations de localisation pendant une période de temps prédéterminée
et identifier une tendance dans un changement du niveau d'activité de l'animal au fil du temps en identifiant la périodicité du niveau d'activité de l'animal pour chaque plage horaire en tant que composante saisonnière acquise par un modèle additif utilisé par la fonction d'identification ; et
une fonction d'ajustement de quantité d'acquisition de données pour ajuster une quantité d'acquisition des données d'informations de localisation, sur la base de la tendance identifiée dans le changement du niveau d'activité de l'animal au fil du temps,
dans lequel la fonction d'acquisition de données acquiert des données d'informations de localisation conformément à la quantité d'acquisition ajustée par la fonction d'ajustement de quantité d'acquisition de données.

13. Procédé de collecte de données exécuté par un dispositif de collecte de données, le procédé comprenant :
une étape d'acquisition de données consistant à acquérir de manière continue des données d'informations de localisation indiquant un niveau d'activité d'un animal ;
une étape d'identification consistant à analyser les données d'informations de localisation pendant une période de temps prédéterminée et à identifier une tendance dans un changement du niveau d'activité de l'animal au fil du temps en identifiant la périodicité du niveau d'activité de l'animal pour chaque plage horaire en tant que composante saisonnière acquise par un modèle additif utilisé par l'étape d'identification ; et
une étape d'ajustement de quantité d'acquisition de données consistant à ajuster une quantité d'acquisition des données d'informations de localisation, sur la base de la tendance identifiée dans le changement du niveau d'activité de l'animal au fil du temps,
dans lequel l'étape d'acquisition de données acquiert des données d'informations de localisation conformément à la quantité d'acquisition ajustée par l'étape d'ajustement de quantité d'acquisition de données.
